# EUROPÄISCHE PATENTSCHRIFT

(11) **EP 0 554 237 B1**
(45) Veröffentlichungstag und Bekanntmachung des Hinweises auf die Patenterteilung: **03.04.1996**
(21) Anmeldenummer: 93890010.7
(22) Anmeldetag: 26.01.1993
(51) Int. Cl.: B01D 29/05, B01D 29/52, B01D 29/60, B01D 29/66, B01D 29/96, B29C 47/68, B01D 35/12

(54) **Filtriervorrichtung für veruneinigte Fluide und Verfahren zu ihrem Betrieb**
Filtration device for contaminated fluids and method of operation
Appareil de filtration pour fluides contaminés et procédé pour sa mise en oeuvre

(30) Priorität: 31.01.1992 AT 161/92
(43) Veröffentlichungstag der Anmeldung: 04.08.1993
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.

(56) Entgegenhaltungen:
- EP-A- 0 250 695
- EP-A- 0 270 501
- DE-A- 4 101 229
- FR-A- 2 438 491

## Beschreibung

Die Erfindung bezieht sich auf eine Filtriervorrichtung für verunreinigte Fluide, insbesondere für zu Extrudierzwecken bestimmtes thermoplastisches Kunststoffmaterial, mit einem Gehäuse, das Führungen für einen oder mehrere Siebträgerkörper aufweist, deren jeder zumindest ein Siebnest trägt und in der Führung zwischen einer Betriebsstellung, einer Rückspülstellung und einer Siebwechselstellung verlagerbar ist, wobei in der Betriebsstellung die Zustromseite des Siebnestes mit zumindest einem Zustromkanal für zu reinigendes Fluid verbunden ist und die Abstromseite des Siebnestes mit zumindest einem Abstromkanal für gereinigtes Fluid verbunden ist, wogegen in der Rückspülstellung der Zustromkanal für das rückzuspülende Siebnest abgeschlossen ist und für die Abfuhr der von diesem Siebnest gelösten Verunreinigungen die Abstromseite dieses Siebnestes mit der Abstromseite eines anderen, in der Betriebsstellung befindlichen Siebnestes und die Zustromseite des rückzuspülenden Siebnestes mit einem Abfuhrkanal verbunden sind, und wobei nur in der Siebwechselstellung das zu wechselnde Siebnest aus dem Gehäuse hervorragt. Weiters bezieht sich die Erfindung auf eine Betriebsweise einer solchen Vorrichtung.

Eine solche Filtriervorrichtung ist für die Reinigung einer verunreinigten thermoplastischen Kunststoffschmelze aus der EP-A 250 695 bekannt. Bei dieser Konstruktion sind zwei einander parallel angeordnete Siebträgerbolzen in den Führungen in Achsrichtung der Bolzen verlagerbar, wobei jeder dieser Siebträgerbolzen zwei Siebnester trägt, die einander parallelgeschaltet von der Schmelze durchströmt werden, die nach Durchsetzung der Siebnester in einen gemeinsamen Abströmkanal fließt. Durch axiale Verschiebung des einen Siebträgerbolzens in die Rückspülstellung werden die Zuströmkanäle für die Siebnester dieses Siebträgerbolzens abgeschlossen und über einen Rückspülkanal die Abstromseiten der beiden Siebnester mit der Abstromseite des anderen, in der Betriebsstellung verbleibenden Siebträgerbolzens verbunden. Die durch Rückspülung aus den Siebnestern des in der Rückspülstellung befindlichen Siebträgerbolzens gelösten Verunreinigungen können ins Freie oder in einen Sammelraum abgeführt werden. Wird der Siebträgerbolzen über die Rückspülstellung hinaus in die Siebwechselstellung verschoben, so können die Siebnester aus diesem Siebträgerbolzen ausgewechselt werden. Diese Konstruktion ermöglicht mit einfachem konstruktiven Aufwand eine wirksame Reinigung der Siebnester durch Rückspülung derselben und auch eine einfache Siebwechslung bei Bedarf. Da nur bei der Siebwechslung das Siebnest aus dem Gehäuse austritt und hiebei mit der Umgebungsluft in Berührung kommt, in den anderen Betriebsstellungen hingegen das Gehäuse das Siebnest gegen Zutritt von Luft abschirmt, wird eine zumeist unerwünschte Belüftung des Siebnestes bzw. des Fluids vermieden. Diese bekannte Konstruktion hat jedoch - ebenso wie andere bekannte Filtriervorrichtungen mit Rückspülmöglichkeit - den Nachteil, daß während des Rückspülvorganges der Schmelzedruck zwischen Filtriervorrichtung und dem angeschlossenen Werkzeug (in der Regel eine Extruderdüse) nicht konstant bleibt, sondern erheblich absinkt. Dies hat Nachteile in der Produktion zur Folge. Der erwähnte Druckabfall ist darauf zurückzuführen, daß einerseits die während des Rückspülvorganges aktiv in der Filtrierstellung verbleibende Filterfläche reduziert wird, was einer Durchflußreduzierung auf Grund erhöhten Durchflußwiderstandes entspricht. Anderseits wird zum Zwecke des Rückspülens ein Teil des Schmelzenstromes abgezweigt, welcher die in der Betriebsstellung verbleibenden Siebnester durchsetzt. Beide Faktoren bewirken, daß der Druck zwischen Filter und Werkzeug tendenziell absinkt.

Die vorliegende Erfindung setzt sich zur Aufgabe, eine Filtriervorrichtung der eingangs beschriebenen Art so zu verbessern, daß der Fluiddruck am Ausgang der Filtriervorrichtung, also zwischen dieser und dem an sie angeschlossenen Werkzeug (z.B. einer Extruderdüse) zumindest im wesentlichen konstant gehalten werden kann. Die Erfindung löst diese Aufgabe dadurch, daß an zumindest einen Abstromkanal zumindest ein Vorratsraum zur Aufnahme einer beim Rückspülvorgang benötigten Fluidmenge angeschlossen ist, in welchem Vorratsraum zumindest ein Kolben zur Verdrängung von Fluid aus dem Vorratsraum geführt ist, und daß dieser Vorratsraum beim Rückspülvorgang sowohl mit der Abstromseite des rückzuspülenden Siebnestes als auch mit dem Abstromkanal in freier Fließverbindung für das gereinigte Fluid steht. Bei zweckentsprechender Betriebsweiseworauf später noch näher eingegangen wird - ist es mit einer solchen Vorrichtung möglich, den Druckabfall, welcher ansonsten durch die oben erwähnten beiden Faktoren hervorgerufen wird, durch kontrollierte Zufuhr von Fluid aus dem Vorratsraum während des Rückspülvorganges zumindest im wesentlichen auszugleichen. Hiebei wird durch den Kolben die im Vorratsraum gespeicherte Fluidmenge während des Rückspülvorganges verdrängt und diese Fluidmenge strömt einerseits in Rückspülrichtung durch das zu reinigende nigende Siebnest, anderseits in den Abstromkanal zur an die Filtriervorrichtung angeschlossene Einrichtung, also z.B. zur Extruderdüse. Diese durch den Kolben verdrängte Fluidmenge addiert sich zur Fluidmenge, welche zum Werkzeug durch das in der Betriebsstellung verbleibende Siebnest strömt. Bei geeigneter Wahl der Menge, der Geschwindigkeit und des Druckes der aus dem Vorratsraum verdrängten Fluidmasse läßt sich eine zumindest weitgehende Kompensation des Druckabfalles vor dem Werkzeug erzielen.

Die Anordnung eines Vorratsraumes zur Aufnahme von für den Rückspülvorgang benötigter Kunststoffschmelze ist aus der EP-A 379 966 an sich bekannt. Dort wird zwar auch durch Ausdrücken der Kunststoffschmelze aus dem Vorratsraum mittels eines Kolbens der Rückspülvorgang unterstützt, jedoch ist hiebei jener Kanal, durch welchen der Vorratsraum mit der Abstromseite des in der Betriebsstellung befindlichen Siebes verbunden ist, durch ein Ventil verschlossen. Es kann daher bei der Verdrängung von Schmelze aus dem Vorratsraum keine Kunststoffschmelze zum Werkzeug gelangen, so daß der Druckabfall dort voll auftritt. Außerdem besteht der Nachteil, daß bei dieser bekannten Konstruktion die Siebe im Kreis in einer um ihr Zentrum verdrehbaren Scheibe angeordnet sind und der Reihe nach in die Betriebsstellung sowie in eine für den Siebwechselvorgang vorgesehene Gehäuseaussparung gelangen. In dieser Gehäuseaussparung stehen die Siebe mit der Umgebungsluft in Kontakt, so daß die in diesen Sieben befindliche Schmelze dem Lufteinfluß unterworfen ist, was häufig unerwünscht ist. Bei der erfindungsgemäßen Konstruktion läßt sich dieser Nachteil problemlos durch entsprechende Bauweise verhindern.

Gemäß einer bevorzugten Ausführungsform der Erfindung ist der Vorratsraum im Gehäuse außerhalb des Siebträgerkörpers angeordnet. Dies ist günstiger als die Anordnung des Vorratsraumes im Siebträgerkörper, obwohl im Prinzip auch diese Konstruktionsvariante denkbar wäre. Die Anordnung des Vorratsraumes im Gehäuse bringt jedoch den Vorteil, daß der Vorratsraum ohne Rücksicht auf die Siebträgerkörpermaße dimensionierbar ist und daß man in der Anordnung des Vorratsraumes frei ist, so daß der Vorratsraum auch nachträglich bei bestehenden Filtriervorrichtungen nachgerüstet werden kann. Dies ist besonders leicht möglich, wenn gemäß einer bevorzugten Bauweise der Vorratsraum in einem gesonderten Gehäusebauteil angeordnet ist.

Weiters bietet die zuvor beschriebene Bauweise den Vorteil, daß ein gemeinsamer Vorratsraum für zumindest zwei Siebträgerkörper vorgesehen ist. Dies bedeutet eine Kosteneinsparung.

Um zu vermeiden, daß sich im Normalbetrieb im Vorratsraum Kunststoffschmelze befindet und durch dauernde Einwirkung von Wärme eine thermische Schädigung erleidet, ist gemäß einer bevorzugten Ausführungsform der Erfindung in der Betriebsstellung des Siebträgerkörpers der Vorratsraum durch den Kolben vom Abstromkanal getrennt. Hiebei besteht eine bevorzugte Bauweise darin, daß in der Betriebsstellung des Siebträgerkörpers der Kolben gegen den Abstromkanal bündig abschließt, um die Strömung im Abstromkanal ungestört zu erhalten.

Es wäre im Prinzip möglich, für den Vorschub des Kolbens jenen Antrieb auszunützen, welcher die Bewegung des Siebträgerkörpers in die Rückspülstellung bewirkt. Günstiger ist es jedoch im Rahmen der Erfindung, für den Vorschub des Kolbens einen eigenen, von der Bewegung des Siebträgerkörpers unabhängigen Antrieb vorzusehen. Gemäß einer bevorzugten Bauweise ist der Antrieb ein Druckmittelzylinder, dessen Kolbenstange mit dem im Vorratsraum befindlichen Kolben verbunden ist. Dies macht es leichter, den Vorschub des Kolbens in der gewünschten Weise zu steuern und damit den Fluiddruck vor dem Werkzeug konstant zu halten. Hiebei ist es erfindungsgemäß vorteilhaft, wenn der Antrieb für die Bewegung des Kolbens zumindest ein Steuerorgan zur Beeinflussig dieser Bewegung aufweist. Ein solches Steuerorgan kann gemäß einer bevorzugten Bauweise ein in die Druckmittelzuleitung des Druckmittelzylinders eingeschaltetes Drosselrückschlagventil aufweisen.

Bei zumindest annähernd gleichen Fluidqualitäten kann mit einer anfänglichen Einstellung der den Rückspülvorgang beeinflussenden Parameter das Auslangen gefunden werden. Da in der Regel jedoch die Fluidzusammensetzung bzw. die Fluideigenschaften nicht konstant sind, ist es erfindungsgemäß günstiger, an den Abfuhrkanal einen Druckfühler für den im Abfuhrkanal herrschenden Fluiddruck anzuschließen und auf diese Weise den Fluiddruck vor dem Werkzeug zu überwachen, insbesondere während des Rückspülvorganges.

Um die Rückspülung zum geeigneten Zeitpunkt durchzuführen, ist im Rahmen der Erfindung ein Druckfühler für den Fluiddruck vor dem Siebnest vorgesehen, der an einen Schwellenwertgeber einer Auslöseschaltung angeschlossen ist, die bei Überschreitung des Schwellenwertes des vom Druckfühler angezeigten Druckes die Rückzugsbewegung des Kolbens zwecks Auffüllung des Vorratsraumes einleitet. Auf diese Weise läßt sich die Verschmutzung des Siebes leicht überwachen, da die Verschmutzung ein Ansteigen des Fluiddruckes vor dem Sieb zur Folge hat.

Das erfindungsgemäße Verfahren zum Betrieb einer erfindungsgemäßen Filtriervorrichtung besteht darin, daß bei Erreichen eines vorbestimmten Fluiddruckes vor dem Siebnest das Auffüllen des Vorratsraumes ausgelöst wird, wobei diese Auffüllung so langsam erfolgt, daß der Fluiddruck nach der Filtriervorrichtung zumindest im wesentlichen konstant bleibt, und daß erst nach Auffüllung des Vorratsraumes mit Fluid das rückzuspülende Siebnest in die Rückspülstellung übergeführt und sodann der Rückspülvorgang durchgeführt wird, wobei durch Wahl der Geschwindigkeit des Kolbenvorschubes während des Rückspülvorganges der Fluiddruck nach der Filtriervorrichtung aufrechterhalten wird, worauf am Ende der Entleerung des Vorratsraumes das gespülte Siebnest wieder in die Betriebsstellung zurückgeführt wird. Erfolgt die Auffüllung des Vorratsraumes genügend langsam, so ist der darauf zurückzuführende Fluid- bzw. Druckverlust vor dem Werkzeug vernachlässigbar klein. Der Auffüllvorgang kann somit - je nach der thermischen Stabilität des verarbeiteten Mediums - einige Sekunden bis einige Minuten dauern. Der Rückspülvorgang ist in der Regel im wesentlichen kürzer, seine Dauer hängt ab von der Aufteilung der aus dem Vorratsraum verdrängten Fluidmenge und von den Druckverhältnissen vor dem Werkzeug.

Die erfindungsgemäße Filtriervorrichtung ist in ihrer Anwendung nicht auf das Gebiet thermoplastischer Kunststoffschmelzen beschränkt, wenngleich dieses Anwendungsgebiet wohl das bedeutsamste ist. Beispielsweise wäre es möglich, verschmutzte Öle oder Fette zu filtrieren, gegebenenfalls auch andere Flüssigkeiten, z.B. Fruchtsäfte.

Die Anzahl der Siebnester sowie der Siebträgerkörper kann beliebig gewählt werden, es kann auch jeweils ein Siebträgerkörper mehrere Siebnester tragen. Auch eine Konstruktion mit nur einem einzigen Siebträgerkörper, welcher ein einziges Siebnest trägt, ist denkbar, wenn die während des Rückspülvorganges aus dem Vorratsraum verdrängte Masse ausreicht, um das an die Filtriervorrichtung angeschlossene Gerät im für einwandfreien Betrieb ausreichendem Maße mit dem benötigten Material zu versorgen. Werden zwei oder mehr Siebträgerkörper verwendet, so werden diese in der Regel einander - in Bezug auf den Durchstrom des zu filtrierenden Materiales - parallel geschaltet, ebenso wie die einzelnen Siebnester des betreffenden Siebträgerkörpers. Unbedingt notwendig ist dies jedoch nicht. Es ist zweckmäßig, die Siebträgerkörper als in ihrer Längsrichtung verschiebbare Kolben auszubilden, die in einem gemeinsamen Gehäuse in ihren Führungen gelagert sind.

Insbesondere bei Anordnung einer größeren Siebträgerkörperanzahl kann es zweckmäßig sein, mehr als einen Vorratsraum vorzusehen, um gegebenenfalls zwei oder mehr Siebträgerkörper bzw. ihre Siebnester unabhängig voneinander zugleich rückspülen zu können. Ebenso ist es möglich, den einzelnen Vorratsräumen jeweils mehr als einen Kolben zuzuordnen, um die Schmelze aus diesem Vorratsraum zu verdrängen. In der Regel wird jedoch mit einem einzigen Kolben aus Gründen des Aufwandes das Auslangen zu finden sein.

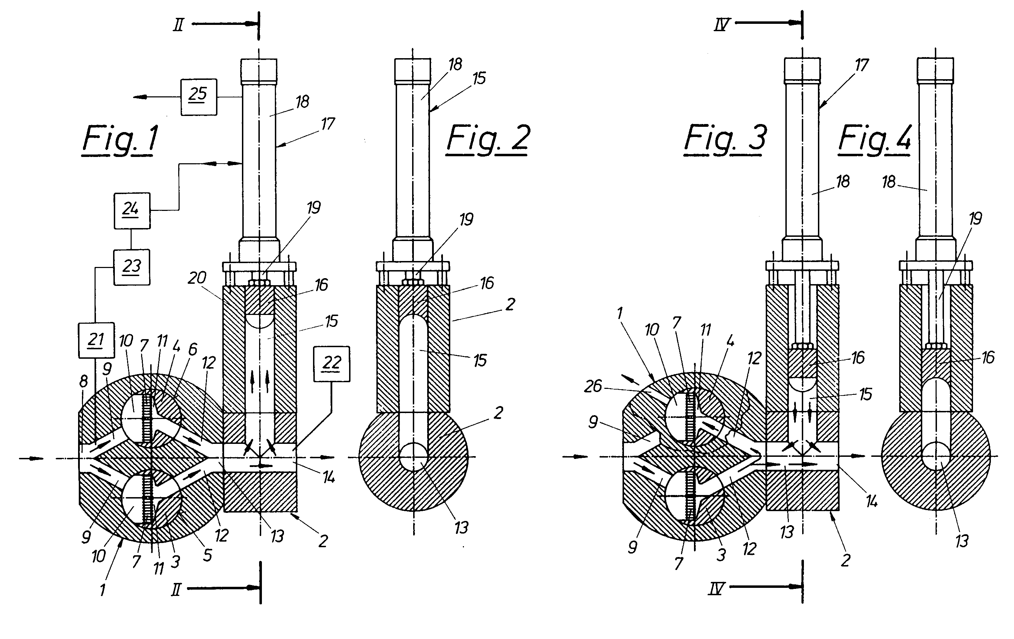

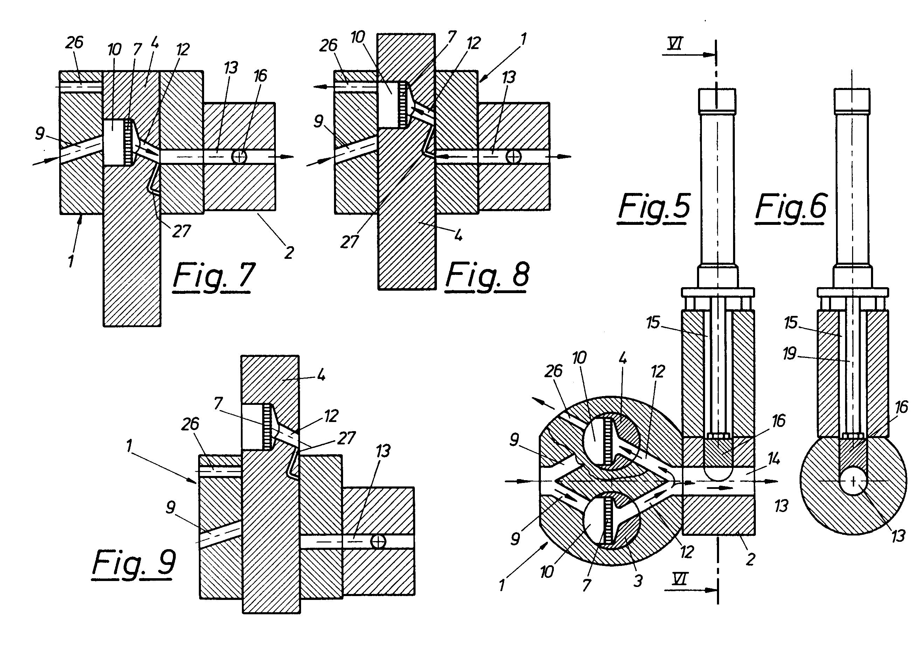

In der Zeichnung ist der Erfindungsgegenstand an Hand eines Ausführungsbeispieles schematisch dargestellt. Fig.1 zeigt die Vorrichtung im Schnitt bei der Auffüllung des Vorratsraumes. Fig.2 ist ein Schnitt nach der Linie II-II der Fig.1. Fig.3 zeigt die Vorrichtung während des Rückspülvorganges. Fig.4 ist ein Schnitt nach der Linie IV-IV der Fig.3. Fig.5 zeigt die Vorrichtung am Ende des Rückspülvorganges. Fig.6 ist ein Schnitt nach der Linie VI-VI der Fig.5. Die Fig.7,8 und 9 zeigen jeweils Horizontalschnitte durch die Längsachse des Siebträgerkörpers, wobei dieser in Fig.7 in der Betriebsstellung, in Fig.8 in der Rückspülstellung und in Fig.9 in der Siebwechselstellung dargestellt ist.

Die Vorrichtung hat ein Gehäuse 1, das mit einem einen gesonderten Bauteil 2 bildenden Ansatz versehen ist. Im Gehäuse 1 sind zwei Siebträgerkörper 3,4 in zylindrischen, von Bohrungen gebildeten Führungen 5,6 längsverschiebbar gelagert. Dadurch läßt sich jeder der Siebträgerkörper 3,4 aus einer Betriebsstellung (Fig.1,7) in eine Rückspülstellung überführen, welche in den Fig.3 und 8 für den Siebträgerkörper 4 dargestellt ist, wobei in Fig.3 der Siebträgerkörper 3 in der Betriebsstellung verblieben ist. Darüber hinaus ist jeder Siebträgerkörper 3,4 in eine Siebwechselstellung (Fig.9) verschiebbar, in welcher das von ihm getragene Siebnest 7 derart aus dem Gehäuse 1 hervorragt, daß das Siebnest 7 ausgewechselt werden kann. Ansonsten ist - wie die Zeichnung zeigt - jedes Siebnest 7 durch das Gehäuse 1 gegen Luftzutritt abgeschirmt, so daß eine Schädigung der zu behandelnden Schmelze durch Lufteinfluß vermieden wird.

Das Gehäuse 1 ist mit einer Eintrittsöffnung 8 für die zu reinigende thermoplastische Kunststoffschmelze versehen. Von dieser Eintrittsöffnung 8 zweigen zwei Zustromkanäle 9 ab, die einander parallelgeschaltet zu den Zustromseiten 10 der beiden Siebnester 7 führen. Von der Abstromseite 11 jedes Siebnestes 7 führt eine mit einem Rückspülkanal 27 (Fig.7 bis 9) versehene Verzweigung 12 eines Abstromkanales 13 weg, welcher sich im Bauteil 2 fortsetzt und an dessen Austrittsöffnung 14 das nicht dargestellte Werkzeug, z.B. ein Schneckenextruder, angeschlossen ist. Vom Abstromkanal 13 im Bauteil 2 zweigt ein Vorratsraum 15 ab, in welchem ein Kolben 16 geführt ist, der durch einen Antrieb 17 im Vorratsraum 5 vor bzw. zurück verschiebbar ist. Der Antrieb 17 ist zweckmäßig vom nicht dargestellten Antrieb für die Verschiebung jedes Siebträgerkörpers 3,4 unabhängig und hat einen Druckmittelzylinder 18, an dessen Kolbenstange 19 der Kolben 16 befestigt ist. Der Druckmittelzylinder 18 ist mit den Wänden 20 des Bauteiles 2 fest verschraubt. Die Stirnfläche des Kolbens 16 ist so ausgebildet, daß sie in der am meisten vorgeschobenen Stellung des Kolbens 16 (Fig.5,6) mit der Wand des Abströmkanales 13 fluchtet, um die Strömungsverhältnisse im Abstromkanal 13 ungestört zu erhalten.

Zur Messung des Druckes des im Zustromkanal 9 zugeführten Mediums ist ein Druckfühler 21 vorhanden und der Schmelzedruck an der Austrittsöffnung 14 bzw. im daran angeschlossenen Werkzeug wird durch einen weiteren Druckfühler 22 überwacht. Diese Druckfühler 21,22 sind der Einfachheit halber nur in Fig.1 dargestellt. Der Druckfühler 21 ist an eine Auslöseschaltung 23 angeschlossen, welche einen Schwellenwertgeber beinhaltet, der bei Überschreiten eines vom Druckfühler 21 gemeldeten Schmelzendruckes im Zustromkanal 9 die Auslöseschaltung 23 zur Auslösung des Rückspülvorganges veranlaßt. An die Auslöseschaltung 23 ist eine Steuerung 24 an sich bekannter Art für die Steuerung des doppeltwirkenden Druckmittelzylinders 18 angeschlossen, an den auch ein Drosselventil 25 angeschlossen ist.

Sobald eines der Siebnester 7 zu verschmutzen beginnt, steigt der Druck der zugeführten Schmelze im zugeordneten Zustromkanal 9. Dies wird vom Druckfühler 21 überwacht. Sobald der Verschmutzungsgrad so groß ist, daß der Druck im Zustromkanal 9 den vorbestimmten Schwellenwert erreicht hat, gibt der Schwellenwertgeber in der Auslöseschaltung 23 diese Schaltung frei und es beginnt der Rückspülvorgang für das betreffende Siebnest 7. Es sei angenommen, daß das im Siebträgerkörper 4 befindliche Siebnest rückzuspülen sei. Hiezu verbleibt zunächst der Siebträgerkörper 4 in der in Fig.1 dargestellten Betriebsstellung, jedoch wird der Druckmittelzylinder 18 über die Steuerschaltung 24 so betätigt, daß der Kolben 16 von der in den Fig.5 und 6 dargestellten Ausgangsstellung langsam in die in den Fig.1 und 2 dargestellte Lage zurückgezogen wird. Um dies ganz langsam durchführen zu können, ist das Drosselventil 25 vorgesehen, über welches das Öl aus dem Druckmittelzylinder 18 nur ganz langsam entweicht. Durch entsprechende Einstellung oder gegebenenfalls auch Steuerung des Drosselventils 25 läßt sich die Geschwindigkeit, mit welcher der Kolben 16 zurückgezogen wird, einstellen oder steuern. Im Zuge der Zurückziehung des Kolbens 16 wird der Vorratsraum 15 durch Abzweigung von Schmelze aus dem zumWerkzeug führenden Abstromkanal 13 aufgefüllt. Da die Zurückziehung des Kolbens 16 jedoch sehr langsam erfolgt, ist der für das Werkzeug anfallende zeitliche Schmelzeverlust vernachlässigbar klein und somit bleibt der vom Druckfühler 22 angezeigte Fluiddruck am Eingang des Werkzeuges zumindest annähernd konstant. Gegebenenfalls kann die Anordnung so getroffen sein, daß der Druckfühler 22 die Geschwindigkeit der Zurückziehung des Kolbens 16 beeinflußt bzw. steuert, derart, daß der vom Druckfühler 22 abgefühlte Druck nie unter einen vorbestimmten Wert absinkt. Der Strom der Schmelze ist durch Pfeile angedeutet. Es ist ersichtlich, daß die Schmelze über die beiden Zustromkanäle 9 die beiden Siebnester 7 der Siebträgerkörper 3,4 parallel durchströmt, wobei die in den Verzweigungen 12 strömenden gereinigten Fluidströme dem Abstromkanal 13 zugeleitet werden, von wo ein Teil der gereinigten Schmelze in den Vorratsraum 15 in der beschriebenen Weise eintritt, der Restanteil durch die Austrittsöffnung 14 zum Werkzeug strömt.

Sobald die Auffüllung des Vorratsraumes 15 mit gereinigter Schmelze beendet ist, beginnt der eigentliche Rückspülvorgang. Hiezu wird durch einen nicht dargestellten Antrieb, z.B. einen Druckmittelzylinder, der Siebträgerkörper 4 aus der in Fig.1 dargestellten Betriebsstellung in die in Fig.3 dargestellte Rückspülstellung in Achsrichtung des Siebträgerkörpers 4 verschoben. In dieser Rückspülstellung steht die Abstromseite 11 des Siebnestes 7 dieses Siebträgerkörpers 4 nach wie vor mit dem Abstromkanal 13 über den Rückspülkanal 27 in Verbindung, jedoch ist die Zustromseite 10 dieses Siebnestes 7 durch die Wand des Gehäuses 1 gegenüber dem zugehörigen Zustromkanal 9 abgeschlossen. Hingegen steht diese Zustromseite 10 mit einem Abfuhrkanal 26 in Verbindung, durch welchen die gelösten Verunreinigungen abgeführt werden können. Aus den Fig.3 und 8 ist ersichtlich, daß hiezu Schmelze auf folgendem Weg strömen kann: Zustromkanal 9 des Siebträgerkörpers 3, Siebnest 7 dieses Siebträgerkörpers 3, Verzweigung 12 dieses Siebträgerkörpers 3, Rückspülkanal 27, Verzweigung 12 des rückzuspülenden Siebträgerkörpers 4, Abstromseite 11 und Siebnest 7 und Zustromseite 10 dieses Siebträgerkörpers 4, Abführkanal 26. Das rückzuspülende Siebnest 7 wird somit in zur Betriebsstellung umgekehrter Richtung von gereinigter Schmelze durchströmt, die zum Teil aus der dem Siebträgerkörper 3 zugeordneten Verzweigung 12 zuströmt, zum Teil aus dem Vorratsraum 15, in welchem zu Rückspülzwecken der Kolben 16 durch den Antrieb 17 vorgeschoben wird. Diese Rückspülung beginnt, sobald der Siebträgerkörper 4 seine Rückspülstellung (Fig.3) erreicht hat. Die Vorschubbewegung des Kolbens 16 erfolgt hiebei nach Abstimmung genau mit jener Geschwindigkeit, welche erforderlich ist, um den Druck an der Austrittsöffnung 14 zumindest im wesentlichen konstant zu halten. Dies wird durch den Druckfühler 22 überwacht. Wieder ist der Schmelzestrom durch Pfeile dargestellt und es ist angedeutet, daß sich die aus dem Vorratsraum 15 durch den Kolben 16 verdrängte Schmelze auf die zum rückzuspülenden Siebnest 7 führende Verzweigung 12 und auf den zur Austrittsöffnung 14 führenden Abstromkanal 13 aufteilt. Die in Rückspülrichtung durch das Siebnest 7 strömende Schmelze löst dort die Verunreinigungen und tritt samt diesen über den Abführkanal 26 aus, entweder ins Freie oder in einen Auffangraum.

Sobald der Kolben 16 seine vorgeschobene Stellung erreicht hat, in welcher seine Stirnfläche mit der Wand des Abstromkanales 13 fluchtet (Fig.5), ist der Rückspülvorgang beendet. Zugleich wird der das rückgespülte Siebnest 7 tragende Siebträgerkörper 4 aus der in Fig.5 dargestellten Rückspülstellung wieder in die in Fig.1 dargestellte Ausgangslage (Betriebsstellung) zurückgeführt. Dann steht die Zustromseite 10 des gereinigten Siebnestes 7 wieder mit dem Zustromkanal 9 in Verbindung und die zugeführte Schmelze strömt durch die beiden einander parallelgeschalteten Siebnester 7.

Wie ersichtlich, befindet sich der Kolben 16 im Normalbetrieb (Kolbenstellung nach Fig.5) in einer Lage, in welcher er den Vorratsraum 15 gegenüber dem Abstromkanal 13 abschließt. Es kann daher keine Schmelze im Vorratsraum 15 stehenbleiben, was bei langer Verweilzeit und entsprechender Temperatureinwirkung eine thermische Schädigung des Kunststoffmateriales (Abbau der Molekülketten) zur Folge haben könnte. Der bündige Abschluß der Stirnfläche des Kolbens 16 mit der Wand des Abstromkanales 13 vermeidet auch tote Ecken, in welchen Schmelzeanteile verbleiben und dadurch geschädigt werden könnten.

Der einen gesonderten Bauteil 2 bildende Abschnitt der Vorrichtung mit dem Vorratsraum 15, dem Kolben 16 und seinem Antrieb 17 läßt sich problemlos bei bereits bestehenden Anlagen nachrüsten.

## Patentansprüche

1. Filtriervorrichtung für verunreinigte Fluide, insbesondere für zu Extrudierzwecken bestimmtes thermoplastisches Kunststoffmaterial, mit einem Gehäuse (1), das Führungen (5,6) für einen oder mehrere Siebträgerkörper (3,4) aufweist, deren jeder zumindest ein Siebnest (7) trägt und in der Führung (5,6) zwischen einer Betriebsstellung, einer Rückspülstellung und einer Siebwechselstellung verlagerbar ist, wobei in der Betriebsstellung die Zustromseite des Siebnestes (7) mit zumindest einem Zustromkanal (9) für zu reinigendes Fluid verbunden ist und die Abstromseite des Siebnestes (7) mit zumindest einem Abstromkanal (13) für gereinigtes Fluid verbunden ist, wogegen in der Rückspülstellung der Zustromkanal (9) für das rückzuspülende Siebnest (7) abgeschlossen ist und für die Abfuhr der in diesem Siebnest (7) gelösten Verunreinigungen die Abstromseite dieses Siebnestes (7) mit der Abstromseite eines anderen, in der Betriebsstellung befindlichen Siebnestes (7) und die Zustromseite des rückzuspülenden Siebnestes (7) mit einem Abfuhrkanal (26) verbunden sind, und wobei nur in der Siebwechselstellung das zu wechselnde Siebnest (7) aus dem Gehäuse (1) hervorragt, dadurch gekennzeichnet, daß an zumindest einen Abstromkanal (13) zumindest ein Vorratsraum (15) zur Aufnahme einer beim Rückspülvorgang benötigten Fluidmenge angeschlossen ist, in welchem Vorratsraum (15) zumindest ein Kolben (16) zur Verdrängung von Fluid aus dem Vorratsraum (15) geführt ist, und daß dieser Vorratsraum (15) beim Rückspülvorgang sowohl mit der Abstromseite (11) des rückzuspülenden Siebnestes als auch mit dem Abstromkanal (13) in freier Fließverbindung für das gereinigte Fluid steht.

2. Vorrichtung nach Anspruch 1, dadurch gekennzeichnet, daß der Vorratsraum (15) im Gehäuse (1) außerhalb der Siebträgerkörper (3,4) angeordnet ist.

3. Vorrichtung nach Anspruch 2, dadurch gekennzeichnet, daß der Vorratsraum (15) in einem gesonderten Bauteil (2) des Gehäuses (1) angeordnet ist.

4. Vorrichtung nach Anspruch 1,2 oder 3, dadurch gekennzeichnet, daß ein gemeinsamer Vorratsraum (15) für zumindest zwei Siebträgerkörper (3,4) vorgesehen ist.

5. Vorrichtung nach einem der Ansprüche 1 bis 4, dadurch gekennzeichnet, daß in der Betriebsstellung des Siebträgerkörpers (3,4) der Vorratsraum (15) durch den Kolben (16) vom Abstromkanal (13) getrennt ist.

6. Vorrichtung nach Anspruch 5, dadurch gekennzeichnet, daß in der Betriebsstellung des Siebträgerkörpers (3,4) der Kolben (16) gegen den Abstromkanal (13) bündig abschließt.

7. Vorrichtung nach einem der Ansprüche 1 bis 6, dadurch gekennzeichnet, daß für den Vorschub des Kolbens (16) ein eigener, von der Bewegung des Siebträgerkörpers (3,4) unabhängiger Antrieb (17) vorgesehen ist.

8. Vorrichtung nach Anspruch 7, dadurch gekennzeichnet, daß der Antrieb (17) ein Druckmittelzylinder (18) ist, dessen Kolbenstange (19) mit dem im Vorratsraum (15) befindlichen Kolben (16) verbunden ist.

9. Vorrichtung nach Anspruch 8, dadurch gekennzeichnet, daß der Antrieb (17) für die Bewegung des Kolbens (16) zumindest ein Steuerorgan zur Beeinflussung dieser Bewegung aufweist.

10. Vorrichtung nach Anspruch 9, dadurch gekennzeichnet, daß das Steuerorgan ein in eine Druckmittelleitung des Druckmittelzylinders (18) eingeschaltete Drosselrückschlagventil (25) aufweist.

11. Vorrichtung nach einem der Ansprüche 1 bis 10, dadurch gekennzeichnet, daß an den Abstromkanal (13) ein Druckfühler (22) für den im Abstromkanal (13) herrschenden Fluiddruck angeschlossen ist.

12. Vorrichtung nach einem der Ansprüche 1 bis 11, dadurch gekennzeichnet, daß zumindest ein Druckfühler (21) für den Fluiddruck vor dem Siebnest (7) vorgesehen ist, der an einen Schwellenwertgeber einer Auslöseschaltung (23) angeschlossen ist, die bei Überschreitung des Schwellenwertes des vom Druckfühler angezeigten Druckes die Rückzugsbewegung des Kolbens (16) zwecks Auffüllung des Vorratsraumes (15) einleitet.

13. Verfahren zum Betrieb einer Filtriervorrichtung nach einem der Ansprüche 1 bis 12, dadurch gekennzeichnet, daß bei Erreichen eines vorbestimmten Fluiddruckes vor dem Siebnest das Auffüllen des Vorratsraumes ausgelöst wird, wobei diese Auffüllung so langsam erfolgt, daß der Fluiddruck nach der Filtriervorrichtung zumindest im wesentlichen konstant bleibt, und daß erst nach Auffüllung des Vorratsraumes mit Fluid das rückzuspülende Siebnest in die Rückspülstellung übergeführt und sodann die Rückspülung durchgeführt wird, wobei durch Wahl der Geschwindigkeit des Kolbenvorschubes während des Rückspülvorganges der Fluiddruck nach der Filtriervorrichtung aufrecht erhalten wird, worauf am Ende der Entleerung des Vorratsraumes das gespülte Siebnest wieder in die Betriebsstellung zurückgeführt wird.

## Claims

1. A filtering device for contaminated fluids, in particular for thermoplastic material intended for extrusion, comprising a housing (1) having guides (5, 6) for one or more screen carrying members (3, 4), each of which carries at least one nest of screens (7) and is displaceable in the guide (5, 6) between an operating position, a backwashing position and a screen-changing position, wherein, in the operating position, the inflow side of the nest of screens (7) is connected to at least one inflow channel (9) for fluid to be purified and the outflow side of the nest of screens (7) is connected to at least one outflow channel (13) for purified fluid, whereas, in the backwashing position, the inflow channel (9) for the nest of screens (7) to be backwashed is closed off and, for the discharge of the impurities extracted in this nest of screens (7), the outflow side of this nest of screens (7) is connected to the outflow side of another nest of screens (7) in the operating position and the inflow side of the nest of screens (7) to be backwashed is connected to a discharge channel (26), and wherein the nest of screens (7) to be changed only projects out of the housing (1) in the screen-changing position, characterised in that at least one reservoir (15), for holding a quantity of fluid required during the backwashing process, is connected to at least one outflow channel (13), at least one piston (16) for the displacement of fluid from the reservoir (15) being guided in the said reservoir (15), and in that, during the backwashing process, this reservoir (15) is connected to both the outflow side (11) of the nest of screens to be backwashed and the outflow channel (13) for the free flow of the purified fluid.

2. A device according to claim 1, characterised in that the reservoir (15) is arranged in the housing (1) outside the screen carrying members (3, 4).

3. A device according to claim 2, characterised in that the reservoir (15) is arranged in a separate structural part (2) of the housing (1).

4. A device according to claim 1, 2 or 3, characterised in that a common reservoir (15) is provided for at least two screen carrying members (3, 4).

5. A device according to one of claims 1 to 4, characterised in that, in the operating position of the screen carrying member (3, 4), the reservoir (15) is isolated from the outflow channel (13) by the piston (16).

6. A device according to claim 5, characterised in that, in the operating position of the screen carrying member (3, 4), the piston (16) ends flush with the outflow channel (13).

7. A device according to one of claims 1 to 6, characterised in that a separate drive (17), independent of the movement of the screen carrying member (3, 4), is provided for advancing the piston (16).

8. A device according to claim 7, characterised in that the drive (17) is a pressure cylinder (18), the piston rod (19) of which is connected to the piston (16) in the reservoir (15).

9. A device according to claim 8, characterised in that the drive (17) for the movement of the piston (16) has at least one control member for influencing this movement.

10. A device according to claim 9, characterised in that the control member has a one-way throttle valve (25) inserted into a pressure line of the pressure cylinder (18).

11. A device according to one of claims 1 to 10, characterised in that a pressure sensor (22) for the fluid pressure in the outflow channel (13) is connected to the outflow channel (13).

12. A device according to one of claims 1 to 11, characterised in that at least one pressure sensor (21) is provided for the fluid pressure upstream of the nest of screens (7) and is connected to a threshold detector of a trigger circuit (23) which initiates the retraction movement of the piston (16), for the purpose of filling the reservoir (15), when the pressure registered by the pressure sensor exceeds the threshold value.

13. A method of operating a filtering device according to one of claims 1 to 12, characterised in that the filling of the reservoir is initiated when a predetermined fluid pressure is reached upstream of the nest of screens, this filling process taking place so slowly that the fluid pressure downstream of the filtering device remains at least substantially constant, and in that only when the reservoir has been filled with fluid is the nest of screens to be backwashed moved into the backwashing position and the backwashing process then carried out, the fluid pressure downstream of the filtering device being maintained through selection of the rate of advance of the piston during the backwashing process, whereupon the washed nest of screens is moved back into the operating position after the evacuation of the reservoir is complete.

## Revendications

1. Appareil de filtration pour fluides contaminés, en particulier pour l'extrusion de certaines matières thermoplastiques, doté d'un logement (1) présentant des guidages (5, 6) pour un ou plusieurs supports de tamis (3, 4), chacun desdits supports de tamis supportant au moins un élément de tamis (7) et pouvant être déplacé dans le guidage (5, 6) entre une position de fonctionnement, une position de rétrolavage et une position de changement de tamis ; dans lequel, dans la position de fonctionnement, le côté amont de l'élément de tamis (7) est relié à au moins un canal d'arrivée (9) du fluide à filtrer et le côté aval de l'élément de tamis (7) est relié à au moins un canal de sortie (13) du fluide filtré, tandis que dans la position de rétrolavage, le canal d'arrivée (9) ne communique pas avec l'élément de tamis (7) à rétrolaver et le côté aval de cet élément de tamis (7) est relié, pour l'évacuation des impuretés détachées dans cet élément de tamis (7), au côté aval d'un autre élément de tamis (7) qui se trouve en position de fonctionnement, le côté amont de l'élément de tamis (7) à rétrolaver étant relié à un canal d'évacuation (26) ; et dans lequel l'élément de tamis (7) à changer ne dépasse du logement (1) que dans la position de changement d'élément de tamis, caractérisé en ce qu'à au moins un canal de sortie (13) est raccordé au moins un espace de réserve (15) destiné à recevoir la quantité de fluide requise lors de l'opération de rétrolavage, dans lequel est guidé au moins un piston (16) destiné à chasser par compression le fluide hors de l'espace de réserve (15), et en ce que cet espace de réserve (15), lors de l'opération de rétrolavage, communique tant avec le côté aval (11) de l'élément de tamis à rétrolaver qu'avec le canal de sortie (13).

2. Appareil selon la revendication 1, caractérisé en ce que l'espace de réserve (15) est agencé dans le logement (1) à l'extérieur du support de tamis (3, 4).

3. Appareil selon la revendication 2, caractérisé en ce que l'espace de réserve (15) est agencé dans une partie indépendante (2) du logement (1).

4. Appareil selon la revendication 1, 2 ou 3, caractérisé en ce qu'il est prévu un espace de réserve commun (15) à au moins deux supports de tamis (3, 4).

5. Appareil selon l'une des revendications 1 à 4, caractérisé en ce que, lorsque le support de tamis (3, 4) est en position de fonctionnement, l'espace de réserve (15) est isolé du canal de sortie (13) par le piston (16).

6. Appareil selon la revendication 5, caractérisé en ce que lorsque le support de tamis (3, 4) est en position de fonctionnement, le piston (16) obture le canal de sortie (13) de manière étanche.

7. Appareil selon l'une des revendications 1 à 6, caractérisé en ce que pour l'actionnement du piston (16) est prévu un entraînement (17) propre, indépendant du mouvement du support de tamis (3, 4).

8. Appareil selon la revendication 7, caractérisé en ce que l'entraînement (17) consiste en un vérin à fluide de pression (18), dont la tige de piston (19) est reliée au piston (16) situé dans l'espace de réserve (15).

9. Appareil selon la revendication 8, caractérisé en ce que l'entraînement (17) assurant le mouvement du piston (16) comporte au moins un organe de commande permettant d'influer sur ledit mouvement.

10. Appareil selon la revendication 9, caractérisé en ce que l'organe de commande présente un clapet anti-retour avec étranglement (25) intégré dans un conduit de fluide de pression du vérin à fluide de pression (18).

11. Appareil selon l'une des revendications 1 à 10, caractérisé en ce qu'au canal de sortie (13) est raccordé un capteur de pression (22) permettant de déterminer la pression de fluide régnant dans le canal de sortie (13).

12. Appareil selon l'une des revendications 1 à 11, caractérisé en ce qu'il est prévu au moins un capteur de pression (21) pour déterminer la pression de fluide en amont de l'élément de tamis (7), ledit capteur de pression étant relié à un indicateur de seuil d'un circuit de déclenchement (23), qui, lorsque la pression indiquée par le capteur de pression dépasse le seuil, commande le mouvement de retrait du piston (16) en vue de remplir l'espace de réserve (15).

13. Procédé de mise en oeuvre d'un appareil de filtration selon l'une des revendications 1 à 12, caractérisé en ce que le remplissage de l'espace de réserve est commandé lorsque le fluide atteint une pression prédéterminée en amont de l'élément de tamis, ledit remplissage se déroulant tellement lentement que la pression de fluide en aval de l'appareil de filtration reste au moins sensiblement constante, et en ce que ce n'est qu'après remplissage de l'espace de réserve en fluide que l'élément de tamis à rétrolaver passe dans la position de rétrolavage et que le rétrolavage est effectué, la pression de fluide en aval de l'appareil de filtration étant maintenue pendant l'opération de rétrolavage par commande de la vitesse d'avance du piston, à la suite de quoi, l'élément de tamis lavé passe à nouveau en position de fonctionnement une fois l'espace de réserve vide.
